# FASCICULE DE BREVET EUROPEEN

(11) **EP 0 952 125 B1**
(45) Date de publication et mention de la délivrance du brevet: **06.03.2002**
(21) Numéro de dépôt: 99400976.9
(22) Date de dépôt: 21.04.1999
(51) Int. Cl.: C04B 35/482, C03B 5/43

(54) **Nouveaux matériaux frittés produits à partir de zircon et de zircone**
Aus Zirkonsilikat und Zirkonoxid hergestellte Sinterwerkstoffe
Sintered materials made from zircon and zirconia

(30) Priorité: 22.04.1998 FR 9805010
(43) Date de publication de la demande: 27.10.1999
(73) Titulaire: SOCIETE EUROPEENNE DES PRODUITS REFRACTAIRES, F-92400 Courbevoie (FR)
(72) Inventeur: Guigonis, Jacques Marius Louis, 84320 Entraigues (FR); McGarry, Charles Nicholas, West Virginia 20201 (US); Jorge, Eric Thierry Georges, 84210 Las Valayars (FR)
(74) Mandataire: Colas, Jean-Pierre

(56) Documents cités:
- WO-A-91/03439
- DD-A- 122 677
- US-A- 3 228 778

## Description

L'invention concerne de nouveaux matériaux frittés produits à partir de zircon et de zircone.

A leurs débuts, les produits frittés élaborés à partir de zircon et de zircone ont été essentiellement utilisés en sous-couche de sole de fours de verrerie en raison de leur tenue à la corrosion insuffisante pour être directement utilisés au contact du verre.

De plus en plus ces produits tendent à être utilisés au contact du verre ; ils ont en effet une résistance à la corrosion inférieure à celle des produits à base d'oxyde de chrome mais ne présentent pas de risque de coloration du verre.

Le brevet U.S. 5 124 287, cédé à la Société CORHART REFRACTORIES CORPORATION, décrit des produits à base de zircon, denses améliorés car résistant aux chocs thermiques et plus facilement utilisables au contact du verre. Ces produits sont essentiellement constitués de zircon et de faibles additions de zircone et d'oxyde de titane. Les auteurs indiquent des teneurs en zircone introduite dans la composition allant de 5 à 25%. Les exemples montrent que pour des produits contenant plus de 25% de zircone on observe l'apparition de fissures lors de la cuisson des blocs et cela même pour des petits blocs d'une masse de moins de 10 kg. Ce brevet précise que si d'autres composés sont présents, ils doivent de préférence représenter moins de 2% en poids si on veut maintenir un niveau de résistance à la corrosion identique à celui des produits constitués essentiellement de zircon dense. Les auteurs indiquent également que de trop forts pourcentages de zircone entraîneraient des coûts élevés ainsi qu'une tendance au lâcher de pierres. Par ailleurs, il est précisé qu'il est préférable d'utiliser de la zircone monoclinique et donc d'éviter la présence de stabilisants tels que l'oxyde d'yttrium.

La Société CORHART commercialise actuellement un produit du type décrit dans le brevet susmentionné sous la désignation ZS-1300 ; c'est ce produit qui est majoritairement utilisé en sole des fours à électrodes en sole.

D'autres produits élaborés à partir de zircon et zircone ont été décrits dans la littérature. Beaucoup d'entre eux sont destinés à une utilisation au contact de métal en fusion. Pour cette application les contraintes sont différentes de celles rencontrées en verrerie. En effet, en métallurgie les températures d'utilisation des blocs réfractaires sont différentes de celles que l'on rencontre en verrerie. De plus, en métallurgie on peut utiliser sans problème particulier des stabilisants de la zircone tels que MgO ou CaO. Par contre, en verrerie, ces stabilisants ne conviennent pas lorsque les blocs réfractaires sont au contact des vapeurs émises par le verre (comme dans le cas des canaux d'écoulement du verre). En effet, ces vapeurs endommagent le bloc réfractaire et il se forme des craquelures. Ceci peut entraîner un effritement du produit et donc un lâcher de pierres dans le verre ce qui est synonyme de défaut. Or tout défaut dans le verre, en particulier dans le verre pour fibres de renforcement, est rédhibitoire.

En verrerie, il existe aujourd'hui un besoin pour un matériau plus résistant en particulier pour des blocs porte-électrodes en sole et en feeder pour les fours de verre pour fibres de renforcement. En plus d'une résistance à la corrosion améliorée ces matériaux doivent répondre à d'autres critères. On doit tout d'abord pouvoir assurer leur faisabilité industrielle. Par "faisabilité industrielle" on entend la possibilité d'obtenir de gros blocs sans fissures. En effet, dans la construction des fours de verrerie les blocs sont de grande taille ; or, plus les pièces sont grandes, plus les contraintes sont importantes et donc plus le risque de fissuration après cuisson est élevé. Ainsi, comme critère de faisabilité on choisira la possibilité de produire des blocs dont la masse est supérieure à 10 kg et sans fissure. Il est effectivement important d'éviter la présence de fissures qui seraient des lieux privilégiés de corrosion. Pour la même raison ces produits doivent présenter une porosité la plus faible possible. D'autre part, compte tenu de la faible viscosité du verre pour fibres de renforcement, on doit s'assurer de la fermeture des joints entre les blocs à la température de fonctionnement du four. Enfin, on doit limiter les coûts.

L'invention vise justement à satisfaire ce besoin.

En cherchant à obtenir un produit qui satisfasse les différentes exigences énumérées ci-dessus, nous avons mis en évidence la possibilité d'obtenir un matériau plus résistant à la corrosion. Contrairement aux enseignements du brevet U.S. 5 124 287, on a trouvé que la présence de pourcentages relativement élevés de zircone n'entraîne pas une tendance particulière au lâcher de pierres et que l'incorporation de différents additifs permet de répondre aux différentes exigences évoquées précédemment.

Plus précisément l'invention concerne un nouveau matériau fritté, caractérisé en ce qu'il est élaboré à partir d'une charge de départ contenant 5 à 40% de zircon et en ce qu'il présente l'analyse chimique suivante en % en poids :

| | Gamme large | Gamme préférée |
|---|---|---|
| ZrO₂ + HfO₂ | 82 - 96 | 87 - 94 |
| SiO₂ | 1,7 - 14 | 3 - 8 |
| TiO₂ | 0,2 - 3 | 0,4 - 1,5 |
| Y₂O₃ | 0,4 - 5 | 0,8 - 3,0 |
| Al₂O₃ | 0,2 - 2,5 | 0,5 - 1,0 |
| Autres | <1 | <0,5 |

L'invention concerne aussi l'utilisation du matériau fritté de l'invention pour constituer la cuve et/ou un canal d'écoulement de four à verre.

L'invention concerne, en outre, un procédé de fabrication d'un corps ayant une forme en matière frittée, qui comprend les étapes suivantes :
a) préparer une charge de départ frittable contenant 5 à 40% en poids de zircon et comprenant, en poids, sur la base des oxydes, 82-96% de ZrO₂ + HfO₂, 1,7-14% de SiO₂, 0,2-3% de TiO₂, 0,4-5% de Y₂O₃, 0,2-2,5% de Al₂O₃ et < 1% d'autres oxydes ;
b) transformer cette charge en une forme crue, et
c) cuire la forme crue résultante à une température dans la gamme d'environ 1400 à 1650°C pendant un temps suffisant pour la fritter.

De préférence, la température de frittage est d'environ 1600°C et la durée de cuisson est comprise entre 10 et 30 heures.

La charge de départ frittable contient 5 à 40% en poids de zircon et a une composition telle que, après frittage, elle donne une matière frittée ayant la composition définie pour la nouvelle matière frittée de l'invention. La charge de départ frittable peut contenir aussi n'importe quels additifs, tels que des liants et/ou des lubrifiants, qui facilitent la formation de la forme crue mais sont éliminés par volatilisation pendant l'étape de cuisson.

De préférence le matériau fritté de l'invention est sous forme d'un bloc pesant au moins 10 kg.

De préférence, le matériau fritté de l'invention est élaboré à partir d'une charge de départ contenant 10 à 20% de zircon.

Les matières premières de la zircone contenant toujours de petites quantités de HfO₂ dont les propriétés sont très voisines de celles de ZrO₂, ces deux oxydes ne seront pas distingués l'un de l'autre, selon la pratique usuelle.

Par "autres", on désigne globalement des oxydes tels que Na₂O, Fe₂O₃, P₂O₅ etc..., et autres impuretés provenant des matières premières utilisées. Ces "autres" ne sont pas des constituants nécessaires, mais simplement tolérés.

La description qui va suivre faite en se référant aux exemples réalisés mettra bien en évidence le rôle de chacun des constituants et les avantages du nouveau produit obtenu.

### EXEMPLES 1-28

Les produits présentés dans ces exemples ont été préparés à partir des ingrédients de départ suivants :

Le zircon E-MZ fourni par la Société TAM et présentant l'analyse chimique moyenne suivante (en poids) : ZrO₂ + HfO₂ : 66%, SiO₂ : 33%, Al₂O₃ : 0,3%, P₂O₅ : 0,3%, Y₂O₃ : 0,1%, TiO₂ : 0,1% et moins de 0,2% d'autres composés tels que Fe₂O₃. Les particules ont un diamètre moyen de 4,7 µm.

De la zircone commercialisée par la demanderesse sous la désignation de zircone CC10 dont la taille moyenne des particules est de 3,5 µm et dont l'analyse chimique moyenne (en poids) est : ZrO₂ + HfO₂ : 99%, SiO₂ : 0,5%, Na₂O : 0,2%, Al₂O₃ : 0,1%, TiO₂ : 0,1%.

De la zircone yttriée fournie par la demanderesse et présentant l'analyse chimique moyenne (en poids) suivante : ZrO₂ + HfO₂ : 94%, Y₂O₃ : 5%, Al₂O₃ : 0,6%, TiO₂ : 0,1% et moins de 0,2% d'autres composés. Les particules ont un diamètre moyen de 10 µm.

La silice présente dans le matériau fritté final est apportée par la dissociation du zircon, mais, éventuellement, on pourrait procéder à un ajout de fumée de silice additionnelle dans la charge de départ.

L'oxyde d'yttrium provient soit de la zircone partiellement stabilisée à l'oxyde d'yttrium soit d'oxyde d'yttrium ajouté à la composition.

Les particules d'oxyde d'yttrium ajoutées à la composition ont un diamètre moyen de 3 à 4 µm.

De l'oxyde de titane de qualité pigment contenant environ 98% de TiO₂ et dont la taille moyenne des particules est de 0,3 µm.

De l'alumine ayant une taille moyenne des particules de 3µm environ.

Il est connu de l'homme de l'art que les composés carbonés ou métalliques entraînent un "bullage" au contact du verre fondu et doivent donc être évités.

Les exemples présentés ont été obtenus par pressage isostatique. D'autres techniques telles que le coulage en barbotine ou le vibrocoulage pourraient être utilisées. Les blocs réalisés sont des cylindres de 200 mm de diamètre et 200 mm de hauteur dont la masse varie entre 28 et 33 kg. Des conditions de frittage usuelles ont été utilisées, c'est-à-dire une cuisson à environ 1600°C pendant 20 heures. Pour quelques compositions nous avons également réalisé des blocs de très grande taille (76 cm x 25 cm x 20 cm) pesant environ 200 kg. L'analyse chimique des différents blocs réalisés est donnée dans le Tableau 1. La masse volumique apparente des produits fabriqués variait entre 4, 7 et 5,2 g/cm³.

Le Tableau 1 résume les compositions de la charge de départ et du matériau fritté final de divers blocs produits conformes à l'invention (exemples 9-25 et 27-28) ou en dehors de l'invention (exemples 1-8 et 26). Le Tableau 1 mentionne également si le bloc obtenu est fissuré ou non et la porosité du matériau fritté obtenu lorsqu'elle a été déterminée. Par "fissure" on entend ici une fente dont la largeur est supérieure à 0,1 mm.

Les exemples 2 à 6 montrent que, pour les matériaux produits à partir d'une charge de départ dans laquelle le zircon n'est pas un ingrédient de départ majoritaire, il n'est pas possible d'obtenir de gros blocs sans fissures en utilisant uniquement du dioxyde de titane comme agent de frittage.

Les exemples 7 à 28, comparés aux exemples 2 à 6, montrent que l'introduction d'oxyde d'yttrium permet d'obtenir de gros blocs sans que des fissures apparaissent lors de la cuisson.

De plus, la comparaison des exemples 11 et 17, 12 et 18 ou 22 et 23, montre que, pour les produits contenant de la silice et des oxydes de titane et d'yttrium, l'ajout d'alumine permet d'atteindre un niveau de frittage encore supérieur. Ceci se traduit par une porosité ouverte diminuée et ce même pour de faibles teneurs d'alumine ajoutée. Nous préférons donc les produits contenant plus de 0,5% d'alumine.

Par ailleurs, nous avons trouvé qu'il est nécessaire d'avoir des matériaux contenant au moins 0,4% d'oxyde d'yttrium pour permettre l'élaboration de gros blocs sans fissuration pour des charges de départ zircon/zircone dans lesquelles le zircon n'est pas majoritaire. Par ailleurs, il ne faut pas que la proportion d'oxyde d'yttrium excède 5% en poids sous peine de faire chuter exagérément la résistance électrique du matériau ce qui, pour une utilisation en sole de four, entraînerait une dissipation importante dans les blocs de l'énergie électrique fournie par les électrodes en sole de four.

La corrosion par le verre a été évaluée par un test consistant à faire tourner des échantillons (diamètre 22 mm et hauteur 100 mm) immergés dans un bain de verre fondu. La vitesse de rotation des échantillons est de 6 tours par minute, le verre est un verre pour fibres de renforcement porté à 1450°C et le test dure 72 heures. A la fin de cette période on évalue le volume corrodé pour chaque échantillon. Le volume corrodé d'un échantillon du produit de référence du commerce (exemple 1) est choisi comme standard. Le rapport de ce volume corrodé à celui de tout autre échantillon multiplié par 100 donne l'évaluation de l'échantillon relativement au standard. Ainsi, des évaluations supérieures à 100 représentent une moindre perte par corrosion que le standard choisi.

La résistance à la corrosion par le verre des matériaux de l'invention est supérieure à celle des produits du marché grâce à l'augmentation du taux de zircone au-delà des valeurs que l'on peut trouver actuellement dans des produits du commerce tels que le ZS-1300 de la Société CORHART qui comprend à l'analyse chimique 65,9% de zircone et 32,1% de silice (la composition de départ comprend essentiellement du zircon et une faible quantité de silice). Ce produit ZS-1300 correspond à l'exemple 1.

Les résultats du test de corrosion sont donnés dans le Tableau 2 ; Ic désigne l'indice de corrosion défini précédemment.

On constate que les matériaux de l'invention ont un indice de corrosion nettement supérieur à celui du produit de référence 1. On considère que la résistance à la corrosion est significativement améliorée lorsque l'indice de corrosion est supérieur de 20% à celui du matériau 1 de référence. Ceci est obtenu pour des matériaux produits à partir d'une charge de départ contenant au plus 40% de zircon et une teneur en ZrO₂ + HfO₂ du matériau fritté final supérieure à 82% en poids. Par ailleurs, on estime que la charge de départ doit contenir au moins 5% de zircon et une teneur en ZrO₂ + HfO₂ n'excédant pas 96% en poids car en dehors de ces limites les matériaux obtenus n'offrent pas d'avantage particulier du point de vue de la résistance à la corrosion, comme le montre une comparaison entre les exemples 24 et 26.

Par ailleurs, la comparaison des exemples 14, 15 et 24 montre que, pour améliorer la résistance à la corrosion, il est préférable de diminuer la porosité en jouant sur les pourcentages des constituants mineurs plutôt que d'ajouter plus de zircone et moins de zircon.

Les exemples démontrent la faisabilité de gros blocs à partir de plus de 40% de zircon (exemples 7 et 8) mais ceux-ci ne satisfont pas à tous les critères requis. En effet, de tels blocs n'offrent pas une résistance à la corrosion suffisamment améliorée par rapport au matériau de référence 1 et ne présentent donc pas d'intérêt particulier.

D'autre part, la silice et la phase vitreuse qu'elle génère jouent un rôle important pour la faisabilité des gros blocs. Ainsi, une quantité minimale de phase vitreuse est nécessaire pour l'obtention de blocs sans fissure. La silice provient de la dissociation du zircon ZrSiO₄ et, éventuellement, d'un ajout volontaire (fumée de silice par exemple). Pour des raisons d'homogénéité des différents composants, en particulier eu égard à la granulométrie, on préfère les compositions dans lesquelles la silice provient essentiellement du zircon. De plus, l'utilisation de zircon est plus économique que celle de la zircone. La charge de départ comprend au minimum 5% en poids de zircon, ce qui correspond à une teneur minimale de 1,7% en poids de silice. Par ailleurs la proportion maximale de 40% de zircon correspond à une teneur maximale de 14% en poids de silice dans le matériau fritté final.

Un autre critère important pour les blocs réfractaires utilisés en fours de verrerie est la possibilité de fermer convenablement les joints entre deux blocs adjacents.

A cette fin il faut que, sur la courbe de la dilatation en fonction de la température, la différence Δl entre la valeur maximale de la dilatation du bloc et la valeur de cette dilatation à la température d'utilisation soit la plus faible possible. Cette température d'utilisation est d'environ 1500°C pour les blocs placés dans la cuve des fours, et de 1250 à 1350°C pour les blocs des canaux de circulation (feeders) du verre fondu.

On a étudié les variations de Δl pour les exemples 16 à 20 et 27. Les résultats sont récapitulés dans le Tableau 3.

La comparaison des exemples 16, 17 et 27 montre que lorsque le taux d'alumine augmente les joints sont de moins en moins bien fermés.

De plus, il est connu de l'homme de l'art que des blocs à forts taux d'alumine utilisés en contact du verre pour fibres de renforcement entraînent des lâchers de pierres. Par ailleurs de fortes teneurs en alumine conduisent à un excès de phase vitreuse et donc à une plus grande sensibilité à la corrosion. Il est donc important de limiter le taux d'alumine. Pour toutes ces raisons, on estime à 2,5% la teneur maximale en alumine admissible. Par ailleurs, du fait que les matières de départ sont toujours impures, on ne peut pas, en pratique, descendre en dessous de 0,2% en poids de Al₂O₃ dans le matériau fritté final.

Pour ce qui est de l'influence de l'oxyde d'yttrium, les exemples 18 à 20 montrent que des proportions croissantes de ce constituant tendent à réduire Δl et que par une optimisation de la teneur en oxyde d'yttrium on peut assurer la fermeture des joints entre les blocs en cuve des fours ou pour les feeders ce qui est particulièrement important pour des verres fluides tels que le verre pour fibres de renforcement.

Il est à noter que le rôle principal de l'oxyde d'yttrium n'est pas de stabiliser complètement la zircone. En effet il est introduit en trop faible quantité pour que la zircone soit stabilisée sous forme cubique. En effet, les analyses en diffraction X montrent que les phases principales sont constituées de zircone monoclinique et de zircone quadratique, mais que la zircone sous forme cubique n'est pas décelable.

Des études réalisées à la microsonde électronique permettent de penser que l'oxyde d'yttrium joue un rôle important dans la faisabilité des produits en participant à la phase vitreuse.

Par ailleurs, il est intéressant de remarquer que pour un taux de zircone donné, l'ajout d'oxyde d'yttrium n'a pas d'influence néfaste sur la résistance à la corrosion, comme le montrent les exemples 14 et 15.

Le dioxyde de titane a pour fonction de promouvoir le frittage du zircon et, probablement, de la zircone. Il favorise donc l'obtention d'un matériau à porosité réduite. Il faut au moins 0,2% en poids de TiO₂ car en dessous de cette valeur son action devient insignifiante. Il ne faut pas, toutefois, que le matériau fritté contienne plus de 3% en poids de TiO₂ car la faisabilité des blocs serait affectée (apparition de fissures).

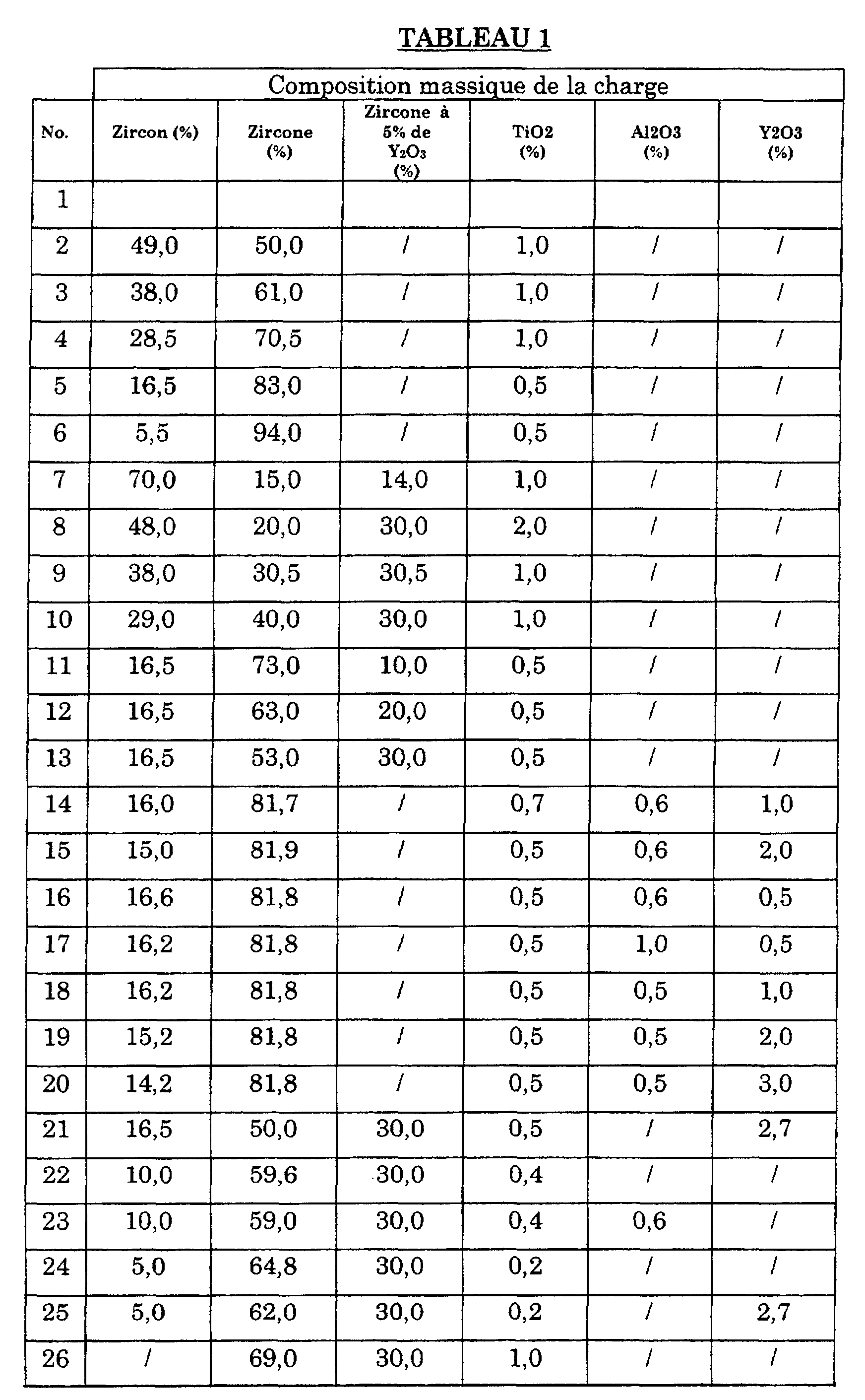

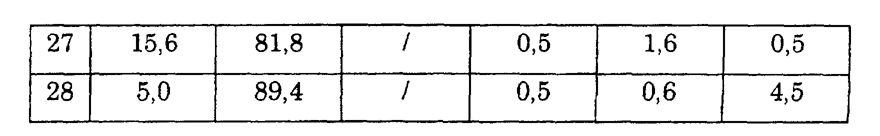

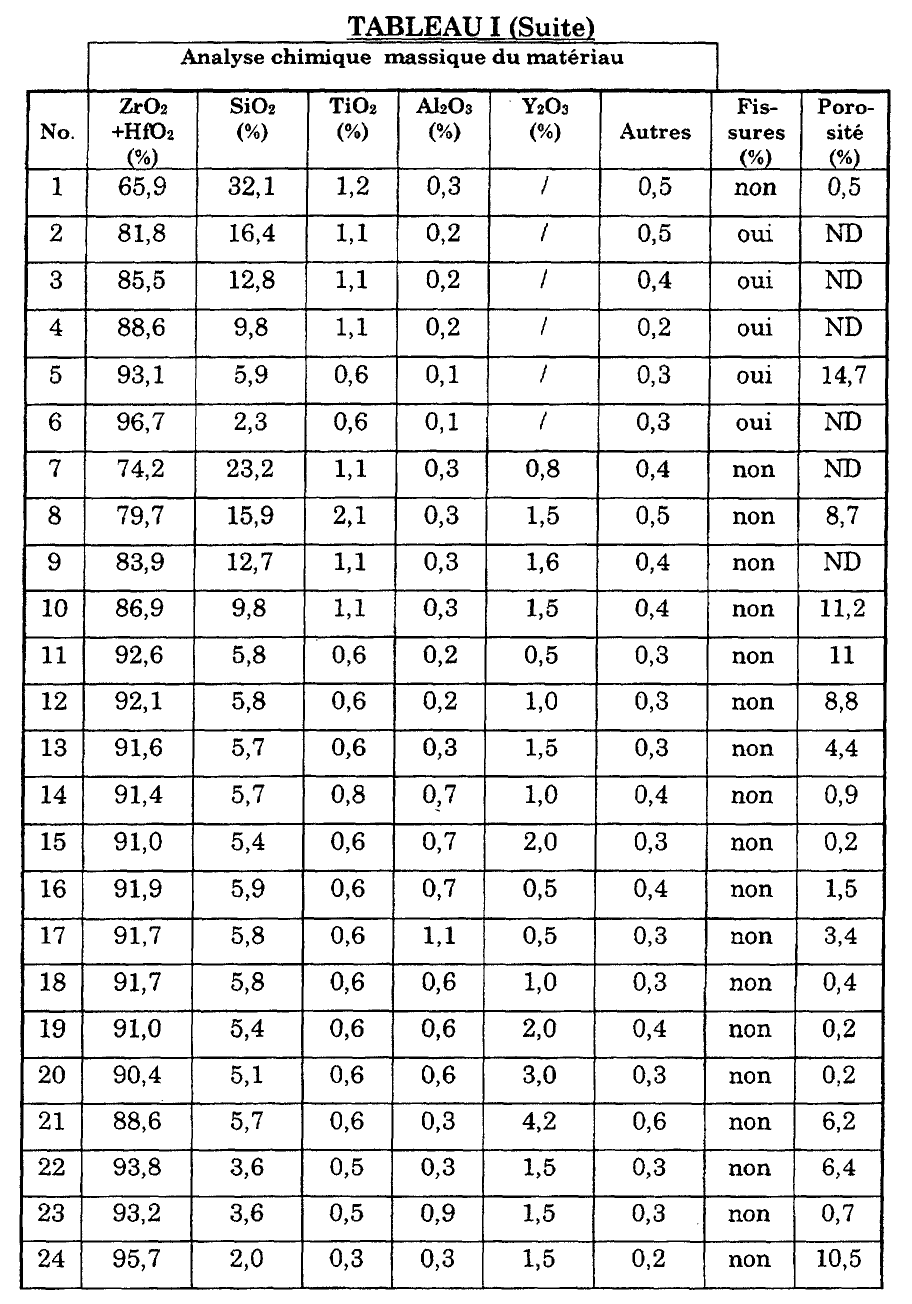

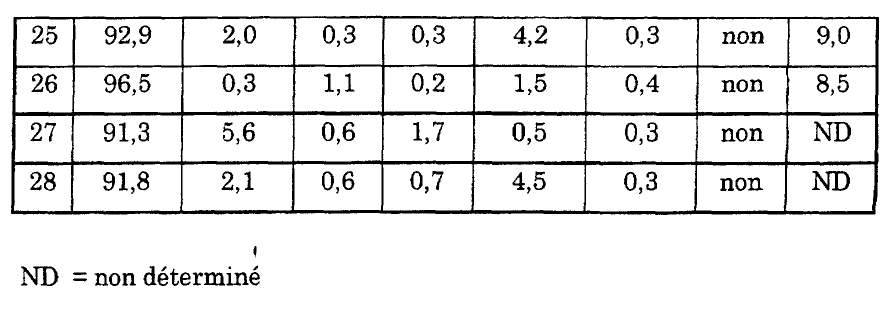

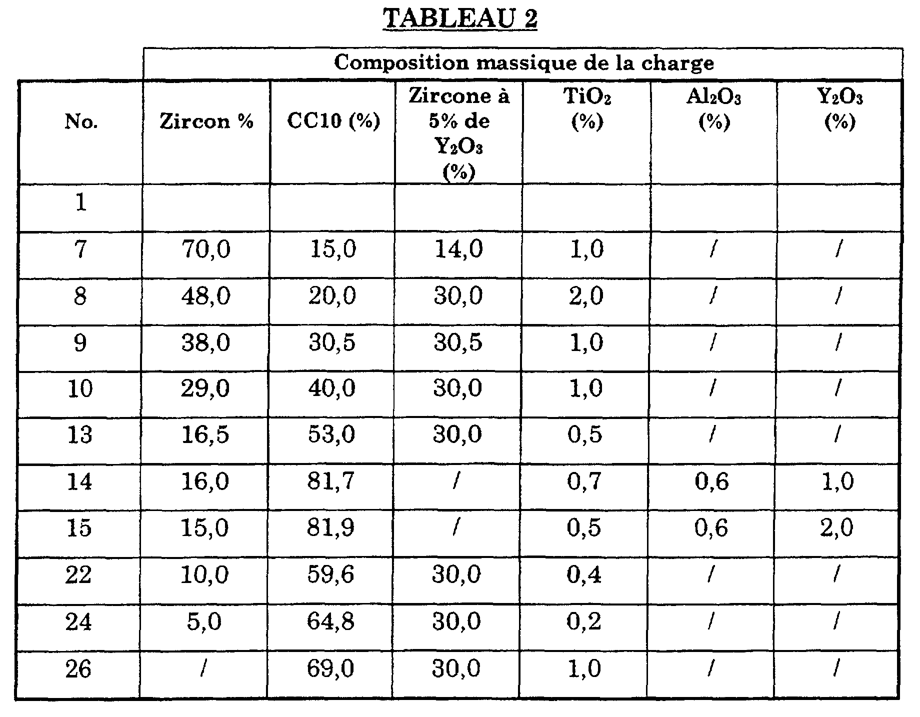

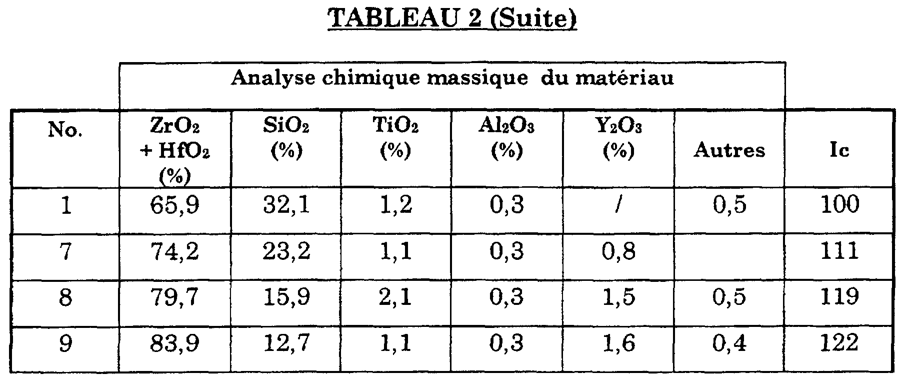

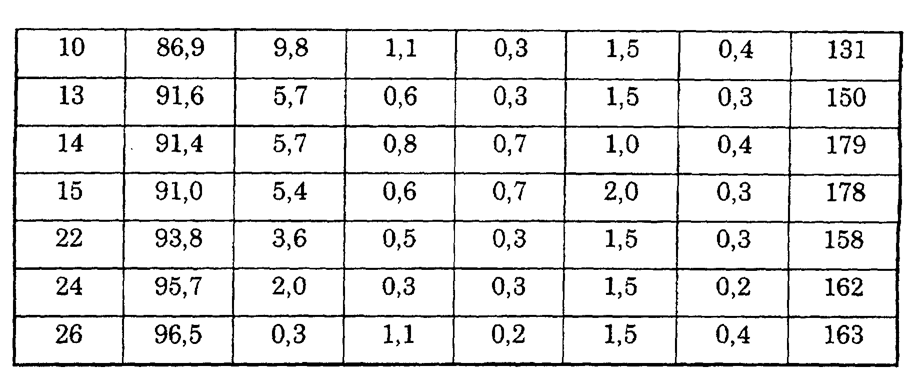

**TABLEAU 3**

| **No.** | **ZrO**_{**2**} **+ HfO**_{**2**} **(%)** | **SiO**_{**2**} **(%)** | **TiO**_{**2**} **(%)** | **Al**_{**2**}**O**_{**3**} **(%)** | **Y**_{**2**}**O**_{**3**} **(%)** | **Δl (1500°C)** | **Δl (1350°C)** |
|---|---|---|---|---|---|---|---|
| 16 | 91,9 | 5,9 | 0,6 | 0,7 | 0,5 | +0,43 | / |
| 17 | 91,7 | 5,8 | 0,6 | 1,1 | 0,5 | +0,6 | / |
| 18 | 91,7 | 5,8 | 0,6 | 0,6 | 1,0 | +0,28 | -0,36 |
| 19 | 91,0 | 5,4 | 0,6 | 0,6 | 2,0 | +0,07 | -0,17 |
| 20 | 90,4 | 5,1 | 0,6 | 0,6 | 3,0 | -0,07 | 0 |
| 27 | 91,3 | 5,6 | 0,6 | 1,7 | 0,5 | +0,9 | / |

### EXEMPLES 29 et 30

Alors que les exemples 1 à 28 avaient été produits à partir de poudres de fine granulométrie, les exemples 29-30 illustrent la possibilité de produire des blocs frittés à partir de poudres plus grossières. Ils illustrent aussi la possibilité de recycler les blocs selon l'invention comme source de zircone.

Des blocs frittés selon l'invention ayant la composition massique suivante : ZrO₂ + HfO₂ : 91%, SiO₂ : 5,9%, TiO₂ : 0,75%, Y₂O₃ : 1,1%, Al₂O_{3 :} 0,8%, autres : 0,45%, ont été broyés et tamisés pour obtenir des grains de trois classes granulométriques, à savoir 2-5 mm, 0,5-2 mm et <0,5 mm. Ces grains ont été utilisés dans l'exemple 30.

On a également broyé et tamisé du ZS-1300 de CORHART pour obtenir des grains de deux classes granulométriques, à savoir 0,5-2mm et <0,5 mm. Ces grains ont été utilisés dans l'exemple 29.

Comme autres ingrédients de départ, on a utilisé :
- fumée de silice fournie par la Demanderesse et présentant l'analyse chimique moyenne suivante : SiO₂ : 93,5%, ZrO₂ : 2,4%, Al₂O₃ : 3,5%, autres 0,6%, et dont les particules ont un diamètre médian de 0,5 µm
- du sable de zircon dont les particules ont un diamètre moyen de 140 µm et la composition suivante : ZrO₂ + HfO₂ : 65%, Al₂O₃: 0,5%, SiO₂ : 34%, autres : 0,5%
- du ciment alumineux CA25 de la Société ALCOA, dont la composition chimique analysée est en poids : CaO : 19%, Al₂O₃ : 79%, SiO₂ : 0,3%, autres : 1,7%
- du zircon, de la zircone CC10 et de l'oxyde d'yttrium tels que ceux utilisés dans les exemples 1-28.

A partir de ces matières de départ, on a préparé deux blocs frittés 29 et 30 ayant les compositions massiques de la charge et du matériau obtenu suivantes :

| Compositions massiques de la charge de départ, % | Exemple 29 | Exemple 30 |
|---|---|---|
| grains, 2-5 mm | - | 10 |
| grains, 0,5-2 mm | 12 | 25 |
| grains, <0,5 | 10 | 30 |
| zircone CC10 | 73,5 | 8 |
| sable de zircon | - | 12,4 |
| zircon | - | 10 |
| Y₂O₃ | 0,5 | 0,6 |
| SiO₂ (fumée de silice) | 2 | 2 |
| ciment CA25 | 2 | 2 |

| Analyse chimique massique du matériau fritté, % | | |
|---|---|---|
| ZrO₂ + HfO₂ | 87,3 | 81,7 |
| SiO₂ | 9,5 | 13,4 |
| Al₂O₃ | 1,7 | 2,2 |
| TiO₂ | 0,3 | 0,5 |
| Y₂O₃ | 0,5 | 1,3 |

Les blocs des exemples 29 et 30 étaient exempts de fissure et avaient une porosité de 3,1 et 12%, respectivement.

## Revendications

1. Matériau fritté, **caractérisé en ce qu'**il est élaboré à partir d'une charge de départ contenant 5 à 40% de zircon et **en ce qu'**il présente l'analyse chimique suivante en % en poids :
| | |
|---|---|
| ZrO₂ + HfO₂ | 82 - 96 |
| SiO₂ | 1,7 -14 |
| TiO₂ | 0,2- 3 |
| Y₂O₃ | 0,4 - 5 |
| Al₂O₃ | 0,2 - 2,5 |
| Autres | <1 |

2. Matériau fritté selon la revendication 1, **caractérisé en ce qu'**il présente l'analyse chimique suivante en % en poids :
| | |
|---|---|
| ZrO₂ + HfO₂ | 87 - 94 |
| SiO₂ | 3 - 8 |
| TiO₂ | 0,4 -1,5 |
| Y₂O₃ | 0,8 - 3,0 |
| Al₂O₃ | 0,5 - 1,0 |
| Autres | <0,5 |

3. Matériau fritté selon la revendication 1 ou 2, **caractérisé en ce qu'**il est sous forme d'un bloc pesant au moins 10 kg.

4. Matériau fritté selon l'une quelconque des revendications 1 à 3, **caractérisé en ce qu'**il est élaboré à partir d'une charge de départ contenant un matériau recyclé comme source de zircone.

5. Matériau fritté selon l'une quelconque des revendications 1 à 4, **caractérisé en ce qu'**il est élaboré à partir d'une charge de départ contenant 10 à 20% de zircon.

6. L'utilisation d'un matériau fritté selon l'une quelconque des revendications 1 à 5, dans un four à verre, pour constituer la cuve du four.

7. L'utilisation d'un matériau fritté selon l'une quelconque des revendications 1 à 5, dans un four à verre, pour constituer un canal d'écoulement du verre.

8. Procédé de fabrication d'un corps ayant une forme en matière frittée, qui comprend les étapes suivantes :
a) préparer une charge de départ frittable contenant 5 à 40% en poids de zircon et comprenant, en poids, sur la base des oxydes, 82-96% de ZrO₂ + HfO₂, 1,7-14% de SiO₂, 0,2-3% de TiO₂, 0,4-5% de Y₂O₃, 0,2-2,5% de Al₂O₃ et < 1% d'autres oxydes ;
b) transformer cette charge en une forme crue, et
c) cuire la forme crue résultante à une température dans la gamme d'environ 1400 à 1650°C pendant un temps suffisant pour la fritter.

9. Procédé selon la revendication 8, dans lequel la température de cuisson est dans la gamme de 1500 à 1600°C et la durée de cuisson est comprise entre 10 et 30 heures.

## Patentansprüche

1. Sinterwerkstoff, **dadurch gekennzeichnet, dass** er aus einer 5 bis 40 % Zirkon enthaltenden Ausgangscharge hergestellt wird und folgende chemische Analyse in Gew.-% aufweist:
| | |
|---|---|
| ZrO₂ + HfO₂ | 82 - 96 |
| SiO₂ | 1,7 - 14 |
| TiO₂ | 0,2 - 3 |
| Y₂O₃ | 0,4 - 5 |
| Al₂O₃ | 0,2 - 2,5 |
| Andere | <1. |

2. Sinterwerkstoff nach Anspruch 1, **dadurch gekennzeichnet, dass** er die folgende chemische Analyse in Gew.-% aufweist:
| | |
|---|---|
| ZrO₂ + HfO₂ | 87 - 94 |
| SiO₂ | 3 - 8 |
| TiO₂ | 0,4 - 1,5 |
| Y₂O₃ | 0,8 - 3,0 |
| Al₂O₃ | 0,5 - 1,0 |
| Andere | <0,5. |

3. Sinterwerkstoff nach Anspruch 1 oder 2, **dadurch gekennzeichnet, dass** er in Form eines Blocks vorliegt, der mindestens 10 kg wiegt.

4. Sinterwerkstoff nach einem der Ansprüche 1 bis 3, **dadurch gekennzeichnet, dass** er aus einer Ausgangscharge hergestellt wird, die ein Recyclingmaterial als Quelle für Zirkoniumdioxid enthält.

5. Sinterwerkstoff nach einem der Ansprüche 1 bis 4, **dadurch gekennzeichnet, dass** er aus einer Ausgangscharge hergestellt wird, die 10 bis 20 % Zirkon enthält.

6. Verwendung eines Sinterwerkstoffs nach einem der Ansprüche 1 bis 5 in einem Glasofen als Ofenschacht.

7. Verwendung eines Sinterwerkstoffs nach einem der Ansprüche 1 bis 5 in einem Glasofen als Glasablaufrinne.

8. Verfahren zur Herstellung eines Formkörpers aus Sinterwerkstoff, umfassend die folgenden Schritte:
a) Herstellung einer sinterbaren Ausgangscharge, die 5 bis 40 Gew. -% Zirkon enthält und, bezogen auf das Gewicht, auf der Grundlage der Oxide, 82 - 96 % ZrO₂ + HfO₂, 1,7 - 14 % SiO₂, 0,2 - 3 % TiO₂, 0,4 - 5 % Y₂O₃, 0,2 - 2,5 % Al₂O₃ und <1 % andere Oxide umfasst;
b) Umwandeln dieser Charge in eine Rohform und das
c) Brennen der resultierenden Rohform bei einer Temperatur im Bereich von etwa 1400 bis 1650 °C für eine Dauer, die ausreichend ist, um diese zu sintern.

9. Verfahren nach Anspruch 8, wobei die Brenntemperatur im Bereich von 1500 bis 1600°C liegt und die Dauer des Brennens zwischen 10 und 30 h liegt.

## Claims

1. Sintered material, **characterized in that** it is produced from a batch containing 5 to 40% zircon and **in that** it has the following chemical composition in % by weight:
| | |
|---|---|
| ZrO₂ + HfO₂ | 82 - 96 |
| SiO₂ | 1.7 - 14 |
| TiO₂ | 0.2 - 3 |
| Y₂O₃ | 0.4 - 5 |
| Al₂O₃ | 0.2 - 2.5 |
| Others | < 1 |

2. Sintered material according to Claim 1,
**characterized in that** it has the following chemical composition in % by weight:
| | |
|---|---|
| ZrO₂ + HfO₂ | 87 - 94 |
| SiO₂ | 3 - 8 |
| TiO₂ | 0.4 - 1.5 |
| Y₂O₃ | 0.8 - 3.0 |
| Al₂O₃ | 0.5 - 1.0 |
| Others | < 0.5 |

3. Sintered material according to Claim 1 or 2,
**characterized in that** it is in the form of a block weighing at least 10 kg.

4. Sintered material according to any one of Claims 1 to 3, **characterized in that** it is produced from a batch containing a recycled material as a source of zirconia.

5. Sintered material according to any one of Claims 1 to 4, **characterized in that** it is produced from a batch containing 10 to 20% zircon.

6. Use of a sintered material according to any one of Claims 1 to 5 in a glass furnace, in order to form the tank of the furnace.

7. Use of a sintered material according to any one of Claims 1 to 5 in a glass furnace, in order to form a glass feeder.

8. Process of production of a body having a shape in sintered material, comprising the following steps :
a) preparation of a sinterable batch containing 5 to 40% by weight zircon and comprising, by weight, on the basis of the oxides, ZrO₂ + HfO₂ : 82-96%, SiO₂ : 1.7-14%, TiO₂ : 0.2-3%, Y₂O₃ :0.4-5%, Al₂O₃ : 0.2-2.5% and <1% of other oxides ;
b) transformation of this batch in a crude shape , and
c) firing of the resulting crude shape at a temperature in the range of about 1400 to 1650°C during a time sufficient to sinter it.

9. Process according to claim 8, in which the firing temperature is in the range of 1500 to 1600°C and the time of firing is contained between 10 to 30 hours.
